# EUROPÄISCHE PATENTANMELDUNG

(11) **EP 4 353 522 A1**
(43) Veröffentlichungstag der Anmeldung: **17.04.2024**
(21) Anmeldenummer: 23198020.2
(22) Anmeldetag: 18.09.2023
(51) Int. Cl.: B60L 53/62, B60L 53/63, B60L 53/67, B60L 53/68

(54) **VERFAHREN ZUM STEUERN EINER VIELZAHL VON LADESTATIONEN IN EINEM LADESYSTEM, ZENTRALEINHEIT UND LADESYSTEM**

(30) Priorität: 13.10.2022 DE 102022126777
(71) Anmelder: E.ON SE, 45131 Essen (DE)
(72) Erfinder: Blume, Sebastian, 47057 Duisburg (DE); Bruckmann, Tobias, 46147 Oberhausen (DE); Herr, Stefan, 40477 Düsseldorf (DE); Hohn, Maximilian, 45131 Essen (DE); Hürten, Christian, 47443 Moers (DE)
(74) Vertreter: Gunzelmann, Rainer

(57) **Zusammenfassung**

Es werden ein Verfahren und eine Vorrichtung zum Steuern einer Vielzahl von Ladestationen (10, 20, 30) in einem Ladesystem zum Laden von Elektrofahrzeugen (50) beschrieben. Das Verfahren umfasst die Verfahrensschritte: Erhalten, für jede Ladestation der Vielzahl von Ladestationen (10, 20, 30), an die ein Elektrofahrzeug (50) elektrisch angeschlossen ist, einer ersten Schätzung einer Standdauer des Elektrofahrzeugs (50), Erhalten, für jede Ladestation der Vielzahl von Ladestationen (10, 20, 30), an die ein Elektrofahrzeug (50) elektrisch angeschlossen ist, einer zweiten Schätzung eines Energiebedarfs des Elektrofahrzeugs (50), Erhalten einer Wahrscheinlichkeit für die Standdauer und/oder den Energiebedarf des Elektrofahrzeugs (50), Bestimmen, für jedes Elektrofahrzeug (50) in Abhängigkeit von der ersten Schätzung, der zweiten Schätzung und der Wahrscheinlichkeit, eines Ladeleistungsbedarfswerts und Ausgeben, in Abhängigkeit von den bestimmten Ladeleistungsbedarfswerten, von Steuerungsinformationen betreffend Abgaben elektrischer Leistung von der Vielzahl von Ladestationen (10, 20, 30) an die angeschlossenen Elektrofahrzeuge (50)

## Beschreibung

### TECHNISCHES GEBIET

Die vorliegende Offenbarung betrifft ein Verfahren zum Steuern einer Vielzahl von Ladestationen in einem Ladesystem, eine Zentraleinheit zum Steuern einer Vielzahl von Ladestationen in einem Ladesystem und ein Ladesystem.

### HINTERGRUND

Bekannte Ladesysteme zum Laden von Elektrofahrzeugen umfassen eine oder mehrere Ladestationen, die mit einem Zentralrechner verbunden sind. Eine Ladestation kann einen oder mehrere Ladepunkte aufweisen, an den ein zu ladendes Elektrofahrzeug elektrisch angeschlossen werden kann. Beispielsweise kann der Ladepunkt ein an einer Ladestation angeschlagenes Ladekabel sein, das mit einem Ladeanschluss des Elektrofahrzeugs verbunden werden kann. Der Ladepunkt kann aber auch ein Ladeanschluss an der Ladestation sein, der mit einem Ladekabel verbunden werden kann. Nachteilig bei bekannten Ladesystemen ist, dass für jedes angeschlossene Elektrofahrzeug die maximale elektrische Ladeleistung reserviert wird, so dass keine effiziente Nutzung der in dem Ladesystem verfügbaren Gesamtleistung erfolgt.

Aus der DE 10 2018 129 335 A1 ist ein Ladesystem für Elektrofahrzeuge bekannt, welches eine Vielzahl von Ladestationen umfasst. Das Ladesystem umfasst ein Ladeprofilbestimmungsmodul, das eingerichtet ist zum Erhalten einer Ladestationskennung und einer Nutzerkennung, Bestimmen, basierend auf der erhaltenen Nutzerkennung und der erhaltenen Ladestationskennung, eines historischen Ladevorgangsdatensatzes, Schätzen eines Ladeparameters für den Ladevorgang, basierend auf dem historischen Ladevorgangsdatensatz, und Bestimmen eines Ladekurvenprofils für einen Ladevorgang, basierend auf dem geschätzten Ladeparameter.

### KURZER ABRISS

Der vorliegenden Offenbarung liegt die Aufgabe zugrunde, ein Verfahren zum Steuern einer Vielzahl von Ladestationen in einem Ladesystem, eine Zentraleinheit zum Steuern einer Vielzahl von Ladestationen in einem Ladesystem und ein Ladesystem bereitzustellen, mit deren Hilfe ein Austausch elektrischer Leistung zwischen Stromnetz(en) und Ladestationen, an die Elektrofahrzeuge angeschlossene sind, optimiert werden kann.

Zur Lösung dieser Aufgabe wird ein Verfahren zum Steuern einer Vielzahl von Ladestationen in einem Ladesystem zum Laden von Elektrofahrzeugen vorgeschlagen, welches folgende Verfahrensschritte umfasst: Erhalten, für jede Ladestation der Vielzahl von Ladestationen, an die ein Elektrofahrzeug elektrisch angeschlossen ist, einer ersten Schätzung einer Standdauer des Elektrofahrzeugs, Erhalten, für jede Ladestation der Vielzahl von Ladestationen, an die ein Elektrofahrzeug elektrisch angeschlossen ist, einer zweiten Schätzung eines Energiebedarfs des Elektrofahrzeugs, Erhalten einer Wahrscheinlichkeit für die Standdauer und/oder den Energiebedarf des Elektrofahrzeugs, Bestimmen, für jedes Elektrofahrzeug in Abhängigkeit von der ersten Schätzung, der zweiten Schätzung und der Wahrscheinlichkeit, eines Ladeleistungsbedarfswerts und Ausgeben, in Abhängigkeit von den bestimmten Ladeleistungsbedarfswerten, von Steuerungsinformationen betreffend Abgaben elektrischer Leistung von der Vielzahl von Ladestationen an die angeschlossenen Elektrofahrzeuge.

Das Ladesystem umfasst eine Vielzahl von Ladestationen. Bei einer Ladestation handelt es sich um eine Vorrichtung, die den Austausch elektrischer Energie zwischen einem Elektrofahrzeug bzw. einem Speicher für elektrische Energie des Elektrofahrzeugs und einem an der Ladestation angeschlossenem Stromnetz ermöglicht. Die Ladestation weist mindestens einen Ladepunkt, vorzugsweise eine Vielzahl von Ladepunkten, auf, um ein Elektrofahrzeug beispielsweise über ein Ladekabel mit der Ladestation zu koppeln, so dass über das Ladekabel elektrische Energie ausgetauscht werden kann. Als Ladepunkt kann eine Ladestation beispielsweise mindestens ein fest angebrachtes Ladekabel aufweisen und/oder über mindestens einen Ladeanschluss verfügen, der mit einem Ladekabel gekoppelt werden kann. Ferner kann die Ladestation Ladetechnik umfassen, um den Ladevorgang zu steuern. Die Ladestationen können sich an unterschiedlichen Orten bzw. Positionen, insbesondere in öffentlichen als auch in teilöffentlichen Räumen befinden und örtlich bzw. virtuell zu einem Ladesystem zusammengefasst werden. Ferner werden Ladestation bzw. Ladepunkte, die über einen gemeinsamen elektrischen Anschluss verfügen, als Ladestations-Cluster bezeichnet. Als Lastmanagement wird eine Verteilungsverfahren bezeichnet, nach dem die elektrische Leistung eines Ladestations-Clusters, insbesondere die maximal verfügbare elektrische Leistung eines Ladestations-Clusters, auf die im Cluster befindlichen Ladestationen verteilt wird.

Ein Elektrofahrzeug ist ein Fahrzeug, das zumindest teilweise elektrisch betrieben werden kann und mindestens einen wiederaufladbaren elektrischen Speicher, beispielsweise eine Batterie, umfasst.

Als Standdauer wird ein Zeitintervall bezeichnet, zu dem ein Elektrofahrzeug während eines Ladevorgangs mit einer Ladestation, beispielsweise über eine Kabelverbindung, gekoppelt ist. Als Energiebedarf wird die Menge an elektrischer Energie bezeichnet, die benötigt wird. Dies kann z.B. die Energiemenge sein, um den elektrischen Speicher eines Elektrofahrzeugs voll zu laden. Ein Zusammenhang zwischen Standdauer und Energiebedarf für einen Ladevorgang wird in dieser Offenbarung als Ladeverhalten bezeichnet. Bei der ersten Schätzung einer Standdauer des Elektrofahrzeugs kann es sich um eine Wahrscheinlichkeitsverteilung einer Standdauer des Elektrofahrzeugs und bei der zweiten Schätzung eines Energiebedarfs des Elektrofahrzeugs kann es sich um eine Wahrscheinlichkeitsverteilung eines Energiebedarfs des Elektrofahrzeugs handeln.

Das Verfahren zum Steuern einer Vielzahl von Ladestationen in einem Ladesystem kann von einem Backendsystem in einer virtuellen Cloud, insbesondere einer Zentraleinheit in dem Backendsystem, ausgeführt werden. Das Backendsystem bzw. die Zentraleinheit steht über ein Kommunikationsnetzwerk mit der Vielzahl von Ladestationen in Kommunikationsverbindung. Die erste Schätzung und die zweite Schätzung können von einer Recheneinheit, insbesondere einer Recheneinheit umfassend ein künstliches neuronales Netzwerk (KNN), erhalten werden. Die Recheneinheit kann in dem Backendsystem angeordnet sein. Es ist auch denkbar, dass die erste Schätzung und die zweite Schätzung in der Zentraleinheit erzeugt werden. Das Verfahren zum Steuern einer Vielzahl von Ladestationen in einem Ladesystem kann auch in einer der Ladestationen ausgeführt werden. In diesem Fall ist es notwendig, dass die Ladestationen miteinander in Kommunikationsverbindung stehen.

Bei der Wahrscheinlichkeit für die Standdauer und/oder den Energiebedarf des Elektrofahrzeugs kann es sich um einen prozentualen Vertrauenswert (sogenannter "Confidence Level") handeln. Beispielsweise kann bei einem Vertrauenswert von 80 % die Wahrscheinlichkeit, dass ein Energiebedarf weniger als 27,14 kWh beträgt, 80 % betragen. Ferner kann beispielsweise bei einem Vertrauenswert von 80% die Wahrscheinlichkeit, dass eine Standdauer mindestens 2 h beträgt, 80 % betragen. Wie die erste Schätzung und die zweite Schätzung kann auch die Wahrscheinlichkeit von einer Recheneinheit, insbesondere einer Recheneinheit umfassend ein KNN, erhalten werden. Es ist aber auch denkbar, dass die Wahrscheinlichkeit in der Zentraleinheit erzeugt wird. Bei dem Ladeleistungsbedarfswert handelt es sich um einen Schätzwert eines Ladeleistungsbedarfs, beispielsweise in kW, eines Elektrofahrzeugs.

Durch das Ausgeben, in Abhängigkeit von den bestimmten Ladeleistungsbedarfswerten, von Steuerungsinformationen betreffend Abgaben elektrischer Leistung von der Vielzahl von Ladestationen an die angeschlossenen Elektrofahrzeuge kann die Abgabe elektrischer Leistung an Ladestationen, an die Elektrofahrzeuge angeschlossene sind, optimiert werden. Die Steuerungsinformationen können dazu beispielsweise von der Zentraleinheit an die jeweiligen Ladestationen gesendet werden, in denen Steuerungsvorrichtungen in Abhängigkeit von der empfangenen Steuerungsinformation die Abgabe elektrischer Energie an angeschlossene Elektrofahrzeuge steuert.

Für eine weiter energieoptimierte Steuerung der Vielzahl von Ladestationen in dem Ladesystem kann das Verfahren ferner, für jede Ladestation der Vielzahl von Ladestationen, umfassen: Bestimmen, in Abhängigkeit von der Wahrscheinlichkeit, einer minimalen Standdauer des Elektrofahrzeugs, Bestimmen, in Abhängigkeit von der Wahrscheinlichkeit, eines maximalen Energiebedarfs des Elektrofahrzeugs, und Bestimmen des Ladeleistungsbedarfswerts in Abhängigkeit von der minimalen Standdauer und dem maximalen Energiebedarf. Basierend auf Schätzungen von Standdauer und Energiebedarf kann ein geschätzter Ladeleistungsbedarfswert der jeweiligen Elektrofahrzeuge berechnet werden. Zur Ermittlung des Ladeleistungsbedarfswerts werden insbesondere die erste Schätzung und die zweite Schätzung verwendet und eine Wahrscheinlichkeit (z.B. 80 %) auszugeben. Daraus werden Prädiktionen des Ladeverhaltens von Elektrofahrzeugen bzw. Kunden abgeleitet, wie beispielsweise, dass die Standdauer eines Elektrofahrzeugs mit der Wahrscheinlichkeit 80 % mindestens *Tₘᵢₙ* und dass der Energiebedarf des Elektrofahrzeugs mit der Wahrscheinlichkeit 80 % maximal *Eₘₐₓ* beträgt. Zu jedem aktuell aktiven Ladevorgang einer Gruppe von Elektrofahrzeugen (z.B. eines Clusters) kann ein Ladeleistungsbedarfswert (*Eₘₐₓ* / *Tₘᵢₙ*) ermittelt werden. Da die Summe aller Ladeleistungsbedarfswerte in einem Ladesystem bzw. Ladestations-Cluster oft nicht der verfügbaren Leistung im Ladesystem entspricht, kann ein Ladeleistungsbedarfswert jedes einzelnen Elektrofahrzeugs verwendet werden, um eine bedarfsgerechte Leistungszuteilung vorzunehmen bzw. anzustreben. Dadurch ist es möglich, Elektrofahrzeugen mit höheren Leistungsbedarfen mehr elektrische Leistung zur Verfügung zu stellen.

Der Vertrauenswert (sogenannter "Confidence Level") in Form einer Wahrscheinlichkeit kann fest vorgegeben sein. Der Vertrauenswert kann auch derart bestimmt werden, dass eine Summe der bestimmten Ladeleistungsbedarfswerte einem vorbestimmten Gesamtleistungswert entspricht. Insbesondere kann der vorbestimmte Gesamtleistungswert die in dem Ladesystem verfügbare elektrische Leistung sein. Beispielsweise kann die Wahrscheinlichkeit durch einen Optimierungsalgorithmus bestimmt werden, so dass eine Summe der bestimmten Ladeleistungsbedarfswerte einem vorbestimmten Gesamtleistungswert entspricht. Dadurch ist es möglich, jedem Elektrofahrzeug eine individuell berechnete Ladeleistung zur Verfügung zu stellen.

Vorzugsweise entspricht die erste Schätzung einer ersten Wahrscheinlichkeitsverteilung und die zweite Schätzung einer zweite Wahrscheinlichkeitsverteilung. Für eine dynamische Anpassung der Wahrscheinlichkeitsverteilungen kann das Verfahren ferner, für jede Ladestation der Vielzahl von Ladestationen, den Schritt Ändern der ersten Wahrscheinlichkeitsverteilung und/oder der zweiten Wahrscheinlichkeitsverteilung in Abhängigkeit von einem Status der Abgabe der elektrischen Leistung der Ladestation an das angeschlossene Elektrofahrzeug umfassen. Insbesondere kann die Änderung der ersten Wahrscheinlichkeitsverteilung und/oder der zweiten Wahrscheinlichkeitsverteilung während eines Ladevorgangs erfolgen. So kann der Status der Abgabe der elektrischen Leistung der Ladestation an das angeschlossene Elektrofahrzeug Information umfassen, ob ein Ladevorgang noch besteht und/oder ob ein angeschlossenes Elektrofahrzeug vollgeladen ist und/oder wie viel Energie ein an eine Ladestation angeschlossenes Elektrofahrzeug während des aktuell bestehenden Ladevorgangs zugeführt wurde.

Zum Bereitstellen einer verbesserten Datenbasis für das Lastmanagement kann das Verfahren ferner die Schritte Interpolieren der erste Schätzung zum Erzeugen der ersten Wahrscheinlichkeitsverteilung als kontinuierliche Wahrscheinlichkeitsverteilung, und/oder Interpolieren der zweiten Schätzung zum Erzeugen der zweiten Wahrscheinlichkeitsverteilung als kontinuierliche Wahrscheinlichkeitsverteilung umfassen. So kann näherungsweise eine kontinuierliche Wahrscheinlichkeitsverteilung durch die Interpolation von Datenpunkteen erreicht werden. Insbesondere kann einer beliebigen vorgegebenen Wahrscheinlichkeit zwischen 0 und 100 % ein minimaler bzw. maximaler Zeitwert bzw. Energiewert zugewiesen werden.

Für eine weiter verbesserte Abgabe elektrischer Leistung an Ladestationen, an die Elektrofahrzeuge angeschlossene sind, können durch einen Lernalgorithmus Vorhersagen für Standdauern von Elektrofahrzeugen und Energiebedarfe von Elektrofahrzeugen getroffen werden. So kann durch ein angelerntes KNN für jede Ladestation der Vielzahl von Ladestationen die erste Schätzung der Standdauer des Elektrofahrzeugs und die zweite Schätzung des Energiebedarfs des Elektrofahrzeugs bestimmt werden. Ferner können auch andere Maschinenlernerfahren, wie z.B. Entscheidungsbäume oder Support-Vector Maschinen, verwendet werden.

Zum Lernen bzw. Trainieren des KNNs können in das KNN eine oder mehrere der folgenden Informationen als Eingangswerte eingehen: Information betreffend einen Zeitpunkt eines Beginns eines Ladevorgangs eines Elektrofahrzeugs, Information betreffend einen Wochentag zum Zeitpunkt des Beginns des Ladevorgangs des Elektrofahrzeugs, Information betreffend einen Zeitpunkt eines Beginns eines Ladevorgangs eines Elektrofahrzeugs in einem Jahr, Information betreffend eine Art des Betriebs des Ladesystems und/oder mindestens einer Ladestation der Vielzahl von Ladestationen, Information betreffend eine örtliche Distanz zwischen einem aktuellen und einem früherem/früheren Ladevorgang/Ladevorgängen, historische Information betreffend Kunden, Kundengruppen und/oder Elektrofahrzeuge, und historische Information betreffend das Ladesystem und/oder mindestens eine Ladestation der Vielzahl von Ladestationen.

Vor dem Lernen bzw. Trainieren des KNN kann eine Datenaufbereitung von in das KNN eingehender Werte ausgeführt werden. Die Datenaufbereitung kann eine zweistufige Gruppierung und/oder eine gewichtete Gruppierung basierend auf einem Zeitpunkt eines Beginns eines Ladevorgangs eines Elektrofahrzeugs, einer Standdauer eines Elektrofahrzeugs und/oder eines Energiebedarfs eines Elektrofahrzeugs umfassen.

Die zweistufige Gruppierung kann ein erstes Gruppieren von Ladeverhalten für eine Vielzahl von kunden- und/oder standortbasierten Identifikationen mit Hilfe eines k-Means oder eines Density-Based Spatial Clustering of Applications with Noise, DBSCAN, Algorithmus und ein zweites Gruppieren der Identifikationen basierend auf Ähnlichkeiten von Ladeverhaltensgruppen umfassen. Die gewichtete Gruppierung kann insbesondere eine Gewichtung basierend auf einem Zeitpunkt eines Beginns eines Ladevorgangs umfassen.

Die eingangs gestellte Aufgabe wird ferner durch eine Zentraleinheit zum Steuern einer Vielzahl von Ladestationen in einem Ladesystem zum Laden von Elektrofahrzeugen, wobei die Zentraleinheit dazu eingerichtet ist, eines der vorstehend beschriebenen Verfahren auszuführen, gelöst.

Die vorliegende Offenbarung betrifft ferner ein Ladesystem zum Laden von Elektrofahrzeugen, umfassend eine Zentraleinheit und eine Vielzahl von Ladestationen.

Gemäß einer weiteren Ausführungsform kann basierend auf einer Schätzung der Standdauer denjenigen Elektrofahrzeugen (mindestens ein Elektrofahrzeug) maximale elektrische Leistung zur Verfügung gestellt werden, die auf Basis der Schätzung voraussichtlich zeitlich als nächstes von einer Ladestation entkoppelt werden. Die maximale Leistung kann durch die maximal mögliche Ladeleistung des Elektrofahrzeugs, durch die maximal mögliche Leistung eines Ladepunkts und/oder durch die verfügbare Anschlussleistung des Ladesystems bzw. des Ladestations-Clusters vorgegeben sein.

Die vorstehend beschriebenen Verfahren und Vorrichtungen können auch dazu verwendet werden, generelle Vorhersagen zu treffen, die für ein Lastmanagement verwendet werden können. Entsprechend Vorhersagen zur Auslastung können beispielsweise von Kartendienstleistern, wie z.B. Google^{™}, verwendet werden.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren und Vorrichtungen ergeben sich aus der nachfolgenden Beschreibung von Ausführungsbeispielen und der Figuren.
- Fig. 1: zeigt eine schematische Darstellung eines Ausführungsbeispiels eines Ladestationssystems mit einer Vielzahl von Ladestationen und einem Backend-System;
- Fig. 2: zeigt ein Ausführungsbeispiel eines Verfahrens zum Steuern einer Vielzahl von Ladestationen zum Abgeben elektrischer Leistung an angeschlossene Elektrofahrzeuge;
- Fig. 3: zeigt eine beispielhafte Wahrscheinlichkeitsverteilung für eine Standdauer eines Elektrofahrzeugs an einer Ladestation;
- Fig. 4: zeigt beispielhaft kumulierte Wahrscheinlichkeiten einer Standdauer eines Elektrofahrzeugs an einer Ladestation;
- Fig. 5: zeigt beispielhaft kumulierte Wahrscheinlichkeiten eines Energiebedarfs eines Elektrofahrzeugs an einer Ladestation;
- Fig. 6: zeigt eine schematische Darstellung eines Ausführungsbeispiels eines künstlichen neuronalen Netzwerks;
- Fig. 7: zeigt eine beispielhafte kumulierte Wahrscheinlichkeitsverteilung in Abhängigkeit von einer minimalen Standdauer eines Elektrofahrzeugs an einer Ladestation;
- Fig. 8: zeigt eine beispielhafte kumulierte Wahrscheinlichkeitsverteilung in Abhängigkeit von einem maximalen Energiebedarf eines Elektrofahrzeugs; und
- Fig. 9: zeigt ein Ausführungsbeispiel eines Verfahrens zum Steuern einer Vielzahl von Ladestationen zum Abgeben elektrischer Leistung an angeschlossene Elektrofahrzeuge.

### DETAILLIERTE BESCHREIBUNG

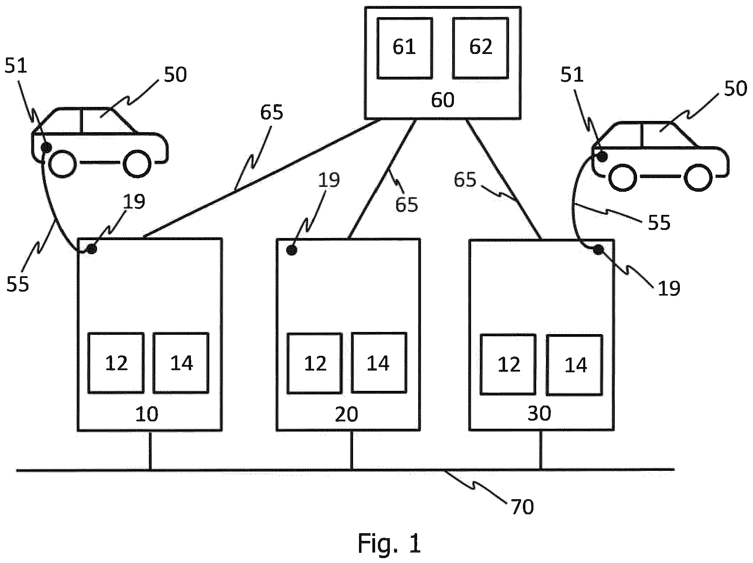

Die Fig. 1 zeigt eine schematische Darstellung eines ersten Ausführungsbeispiels eines Ladestationssystems mit einer Vielzahl von Ladestationen 10, 20 und 30 und einem Backend-System 60. Die Ladestationen 10, 20 und 30 bilden ein Ladestations-Cluster, welches beispielsweise in einem Parkhaus angeordnet sein kann. Die Ladestationen 10, 20 und 30 werden über ein Versorgungstromnetz 70 mit Strom versorgt. Jede der Vielzahl von Ladestationen 10, 20 und 30 umfasst eine Steuerungsvorrichtung 12 zum Steuern einer Abgabe elektrischer Leistung an ein Elektrofahrzeug, eine Kommunikationsvorrichtung 14 und einen Ladeanschluss 19 zum Laden eines Elektrofahrzeugs. Weitere ladestationsspezifische Vorrichtungen, wie beispielsweise Wechselrichter, Stromzähler, etc., können in jeder der Ladestationen 10, 20 und 30 vorgesehen sein, sind in der schematischen Zeichnung der Fig. 1 jedoch nicht gezeigt.

Die Fig. 1 zeigt ferner beispielhaft zwei Elektrofahrzeuge 50 mit einem jeweiligen Ladeanschluss 51. Mit Hilfe eines Ladekabels 55, welches in dem Elektrofahrzeug 50 in den Ladeanschluss 51 gesteckt und in der Ladestation 10, 30 mit dem Ladeanschluss 19 verbunden ist, kann die Ladestation 10, 30 das Elektrofahrzeug 50 mit elektrischer Energie laden.

Das Backend-System 60 ist über ein Kommunikationsnetzwerk 65 mit jeder der Ladestationen 10, 20 und 30 verbunden. Bei dem Kommunikationsnetzwerk 65 kann es sich beispielsweise um ein drahtloses oder ein drahtgebundenes Kommunikationsnetzwerk, wie das Internet, ein Mobilfunknetzwerk (5G, LTE), Ethernet oder WLAN handeln. Das Backend-System 60 umfasst ein KNN 61 und eine Zentraleinheit 62.

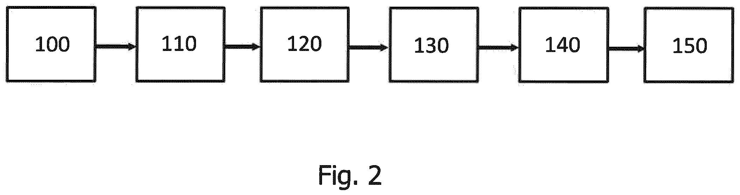

Die Fig. 2 zeigt gemäß einem Ausführungsbeispiel, welche sequenziellen Verfahrensschritte zur Steuerung der Ladestationen 10, 20 und 30 zum Abgeben elektrischer Leistung an angeschlossene Elektrofahrzeuge 50 ausgeführt werden können. Die Verfahrensschritte umfassen Datenaufbereiten 100, Bereitstellen 110 von Eingangsparametern für ein KNN, Verarbeiten 120 der Eingangsparameter in dem KNN, Ausgeben 130 von Ausgangsparametern des KNN, dynamisches Anpassen 140 von Wahrscheinlichkeitsverteilungen und Ausführen 150 eines Lastmanagements. Das Verfahren der Fig. 2 kann insbesondere von dem in der Fig. 1 gezeigten Ladestationssystem ausgeführt werden und wird nachfolgend unter Bezugnahme auf die Fig 1 erläutert.

Zunächst wird die Datenaufbereitung 100 des Verfahrens der Fig. 2 beschrieben. Die Datenaufbereitung 100 beinhaltet eine Erfassung, Filterung und Aufbereitung von Eingangsdaten für ein neurales Netzwerk, insbesondere das in der Fig. 1 gezeigte KNN 61. Ferner kann eine Standardisierung der Eingangsdaten vorgesehen sein, welche hier nicht näher erläutert wird. Für die Datenaufbereitung wird ein k-Means-Algorithmus zur Vektorquantifizierung angewendet. Aufgrund einer üblicherweise hohen Anzahl verschiedener Ladestationen bzw. Ladepunkten 10, 20 und 30 und den Elektrofahrzeugen 50 zugeordneten Kundenidentifikationsnummern werden Kunden mit ähnlichem Ladeverhalten gruppiert, um ein möglichst hohe Vorhersagegenauigkeit der einzelnen Ladeverhalten zu erreichen. Insbesondere werden zur Gruppierung der Ladeverhalten die Größen Zeitpunkt (Uhrzeit) des Ladevorgangbeginns, Standdauer und/oder Energiebedarf verwendet. Es ist auch denkbar, weitere Größen, wie z.B. die nachfolgend beschriebenen Eingangsgrößen des KNN, zur Gruppierung zu verwenden.

Im Folgenden wird eine zweistufige Gruppierung des Ladeverhaltens beschrieben. Die Gruppierung von Ladeverhalten kann insbesondere kundenbasiert oder standortbasiert erfolgen. Bei der kundenbasierten Gruppierung wird eine Kunden-, Kundengruppen-, oder Elektrofahrzeug-Identifikation (ID) verwendet und bei der standortbasierten Gruppierung wird eine Ladepunkt-, Ladestations- oder Standort-ID verwendet. Die Gruppierung umfasst zwei Stufen. Zunächst werden für jede ID einzeln übliche Ladeverhalten durch Anwendung des k-Means-Algorithmus identifiziert. In der Tabelle 1 sind beispielhaft zu einer ID gehörige Kennwerte von Ladevorgängen dargestellt. Es wird dabei angenommen, dass ein Kunde mit der ID "A" in der Vergangenheit in einem definierten Zeitraum vier Ladevorgänge abgeschlossen hat bzw. an einer Ladestation mit der ID "A" wurden vier Ladevorgänge getätigt.

**Tabelle 1: Beispielhafte Ladevorgänge der ID "A"**

| Ladevorgang | ID | Uhrzeit | Standdauer | Energiebedarf |
|---|---|---|---|---|
| 1 | A | 07:40 Uhr | 8,5 h | 20 kWh |
| 2 | A | 09:40 Uhr | 9 h | 22 kWh |
| 3 | A | 16:30 Uhr | 3 h | 7 kWh |
| 4 | A | 17:00 Uhr | 3,5 h | 9 kWh |

Beim k-Means-Algorithmus wird eine Anzahl an Zentren vorgegeben. Wenn z.B. drei Zentren vorgegeben werden, können drei unterschiedliche Gruppen, die ein bestimmtes Ladeverhalten repräsentieren, gefunden werden. Dazu kann der k-Means-Algorithmus mehrfach mit unterschiedlichen Anzahlen an Zentren angewendet werden. Zur Bewertung, welche Anzahl an Zentren am besten geeignet ist, kann ferner ein Silhouettenkoeffizient als Metrik verwendet werden. Als Ergebnis für die in der Tabelle 1 dargestellten Ladeverhalten können zwei Ladeverhaltensgruppen mit den in der Tabelle 2 gezeigten Eigenschaften erhalten werden:

**Tabelle 2: Beispielhafte Ladeverhaltensgruppen der ID "A"**

| Zentrum | ID | Uhrzeit | Standdauer | Energiebedarf |
|---|---|---|---|---|
| 1 | A | 8:00 Uhr | 8,75 h | 21 kWh |
| 2 | A | 16:45 Uhr | 3,25 h | 8 kWh |

Die zur ID "A" gehörigen Ladevorgänge können in zwei Gruppen unterteilt werden. Die Gruppe 1 der ID "A" besitzt das Zentrum mit einer Uhrzeit von 8:00 Uhr, einer Standdauer von 8,75 h und einem Energiebedarf von 21 kWh.

Nachdem die zu einer ID gehörigen Ladevorgänge einzeln gruppiert wurden, werden in der zweiten Gruppierungsstufe IDs, welche ähnliche Ladeverhaltensgruppen aufweisen, ein zweites Mal gruppiert. In der Tabelle 3 sind beispielhafte Ladeverhaltensgruppen der IDs "A", "B" und "C" gezeigt:

**Tabelle 3: Beispielhafte Ladeverhaltensgruppen der ID A, B und C**

| Zentrum | ID | Uhrzeit | Standdauer | Energiebedarf |
|---|---|---|---|---|
| 1 | A \| | 8:00 Uhr | 8,75 h | 21 kWh |
| 2 | A | 16:45 Uhr | 3,25 h | 8 kWh |
| 1 | B | 8:25 Uhr | 8,00 h | 20 kWh |
| 2 | B | 15:30 Uhr | 3,50 h | 9kWh |
| 1 | C | 12:30 Uhr | 1,50 h | 2 kWh |

Die IDs "A" und "B" weisen ähnliche Ladeverhaltensgruppen auf und werden einer Gruppe zugeordnet. Es ist denkbar, dass dem KNN nur die Kundengruppennummer, z.B. "1", zugeführt wird. Kunde "C" besitzt eine abweichende Ladeverhaltensgruppe und wird einer anderen Kundengruppe zugeordnet.

Das vorstehend beschriebene Ausführungsbeispiel beruht auf dem k-Means-Algorithmus. Das Verfahren kann aber auch mit anderen Gruppierungs-Algorithmen, wie z.B. DBSCAN (Density-Based Spatial Clustering of Applications with Noise), ausgeführt werden. Nachfolgend wird eine Gruppierung des Ladeverhaltens mit Gewichtung beschrieben. Zunächst werden alle Ladevorgänge mit dem k-Means-Algorithmus gruppiert. Das Zentrum jeder Gruppe wird durch Zeitpunkt (Uhrzeit) des Ladevorgangbeginns, Standdauer und Energiebedarf definiert. Ein Beispiel ist in der Tabelle 4 gezeigt. Jeder Ladevorgang kann einer Ladegruppe zugeordnet werden. Auf Basis aller zu einer ID gehörigen Ladevorgänge werden die Anteile an den Ladegruppen berechnet. Ein Ergebnis könnte wie folgt sein: Kunde A besitzt zu 30 % das Ladegruppenverhalten Nr. 8 und zu 70 % das Ladegruppenverhalten Nr. 42. Die Ladegruppenverhalten 8 und 42 sind beispielhaft in Tabelle 4 gezeigt:

**Tabelle 4: Beispielhafte Ladegruppenverhalten**

| Ladegruppe | Uhrzeit des Zentrums | Anteile der Ladevorgänge einer ID an der Ladegruppe |
|---|---|---|
| 8 | 08:00 Uhr | 30 % |
| 42 | 20:00 Uhr | 70 % |

Mit Beginn des Ladevorgangs ist bekannt, zu welcher Uhrzeit der Ladevorgang begonnen hat. Information zur Standdauer und Energiemenge sind zu Beginn des Ladevorgangs nicht bekannt. Die Uhrzeit des Ladevorgangbeginns kann daher für eine Gewichtung verwendet werden. Würde beispielsweise Kunde "A" einen Ladevorgang um 10:00 Uhr morgens beginnen, ist dieser Ladevorgang eher der Ladegruppe Nr. 8, dessen Zentrum durch die Uhrzeit 08:00 Uhr definiert ist, zuzuordnen, als der Ladegruppe Nr. 42, dessen Zentrum durch die Uhrzeit 20:00 Uhr definiert ist.

Nachfolgend wird der Verfahrensschritt des Bereitstellens 110 von Eingangsparametern für das KNN gemäß Fig. 2 beschrieben. Insbesondere werden nachfolgend die möglichen Eingangsparameter beschrieben

Als Eingangsparameter "Uhrzeit des Ladevorgangbeginns" wird als Beginn des Ladevorgangs der Zeitpunkt definiert, an dem eine Freigabe für das Laden des Elektrofahrzeugs erfolgt. Dies kann der Zeitpunkt nach der Kopplung des Elektrofahrzeuges mit der Ladestation bzw. dem Ladepunkt oder der Zeitpunkt einer Authentifizierung des Elektrofahrzeugs sein, z.B. 14:36 Uhr.

Als Eingangsparameter "Wochentag" ist der Wochentag zum Zeitpunkt des Ladevorgangbeginns gemeint, z.B. Montag.

Als Eingangsparameter "Informationen über den aktuellen Zeitpunkt im Jahr" ist der Zeitpunkt des Ladevorgangbeginns gemeint, z.B. 245ter Tag im Jahr oder 26te Kalenderwoche im Jahr.

Als Eingangsparameter "Informationen über die Art des Ladestationsbetriebs" können einer Ladestation und dessen Ladepunkte nur einer bestimmten Personengruppe zur Verfügung stehen. Mögliche Arten des Ladestationsbetriebs können beispielsweise privat, öffentlich oder geschäftlich sein.

Als Eingangsparameter "Örtliche Distanz zwischen aktuellem und vorigen Ladevorgang/Ladevorgängen" können auf Basis eines eindeutigen Identifikationsschlüssels Ladevorgänge einem Kunden, einer Kundengruppe oder einem Elektrofahrzeug zugeordnet werden. Über den Identifikationsschlüssel kann festgestellt werden, an welcher Ladestation bzw. welchem Ladepunkt der Kunde oder die Kundengruppe in der Vergangenheit Elektroahrzeuge geladen hat oder an welcher Ladestation bzw. welchem Ladepunkt ein Elektrofahrzeug in der Vergangenheit geladen wurde. Über Standortinformationen der Ladestationen bzw. Ladepunkte, kann eine örtliche Distanz zwischen der Ladestation bzw. dem Ladepunkt eines aktuellen Ladevorgangs und vergangener Ladevorgänge berechnet werden, z.B. 184 km.

Als Eingangsparameter "Historische Daten von Kunden, Kundengruppen oder Elektrofahrzeugen" können Informationen über vergangene Ladevorgänge verwendet werden. Über einen eindeutigen Identifikationsschlüssel können Ladevorgänge einem Kunden, einer Kundengruppe oder einem Elektrofahrzeug zugeordnet werden. Historische Daten können Informationen über vergangene Ladevorgänge eines Kunden, einer Kundengruppe oder eines Elektrofahrzeugs, wie Standdauer, Ladedauer, geladene Energiemenge, Zeitpunkt des Ladevorgangbeginns, Zeitpunkt des Ladevorgangendes, Zeitpunkt, an dem das Elektrofahrzeug vollgeladen wurde und/oder Rückmeldung über die Zufriedenheit des Kunden umfassen.

Als Eingangsparameter "Historische Daten des Standortes" kann Informationen über vergangene Ladevorgänge verwendet werden. Über einen eindeutigen Identifikationsschlüssel können Ladevorgänge einer Ladestation bzw. einem Ladepunkt zugeordnet werden. Historische Daten können Informationen über vergangene Ladevorgänge an einer Ladestation bzw. einem Ladepunkt oder einem Ladestandort, wie Standdauer, Ladedauer, geladene Energiemenge, Zeitpunkt des Ladevorgangbeginns, Zeitpunkt eines Ladevorgangendes, Zeitpunkt, an dem das Elektrofahrzeug vollgeladen wurde und/oder eine Rückmeldung über die Zufriedenheit des Kunden umfassen.

Zum Verarbeiten 120 der Eingangsparameter in dem KNN 61 gemäß Fig. 2 erhält das KNN die in der Verfahrensschritt Bereitstellen 110 von Eingangsparametern für das KNN 61 beschriebenen Parameter sowie die Ergebnisse der Gruppierungsalgorithmen aus der Datenaufbereitung 110. Das KNN 61 ist ein Feed-Forward Netzwerk mit mehreren Schichten und wird auf die Ausgangsgrößen Standdauer und Energiemenge trainiert.

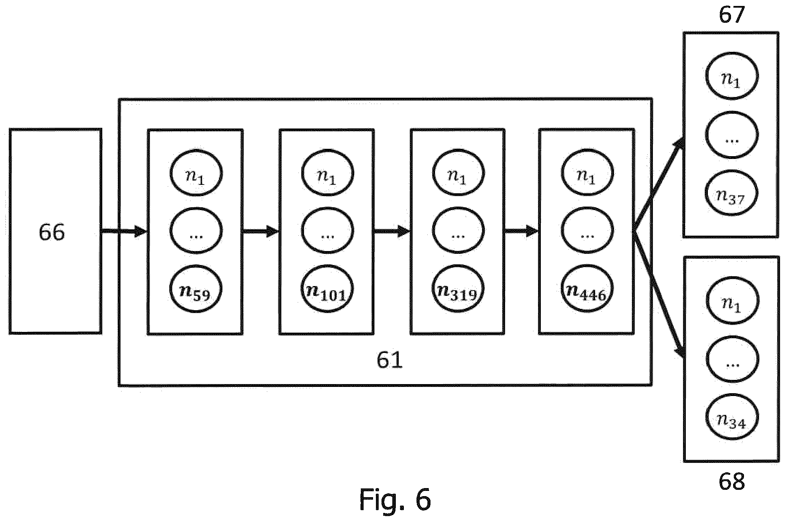

Als Nächstes wird das Ausgeben 130 von Ausgangsparametern des KNN 61 gemäß Fig. 2 beschrieben. Das KNN 61 ist als ein probabilistischer Klassifizierer ausgelegt und besitzt zwei Ausgabeschichten, eine Ausgabeschicht zur Vorhersage der Standdauer und eine Ausgabeschicht zur Vorhersage der benötigten Energiemenge (siehe beispielsweise Fig. 6). Es ist aber auch denkbar, dass zwei KNNs mit jeweils einer Ausgabeschicht verwendet werden. Jede Ausgabeschicht besitzt eine definierte Anzahl an Ausgangsneuronen bzw. Ausgängen. Jeder Ausgang repräsentiert eine Klasse. Eine Klasse repräsentiert ein Zeitintervall bzw. ein Energieintervall. Die Klassen für die Ausgabeschicht zur Vorhersage der Standdauer können beispielsweise wie folgt definiert sein:
- Klasse 1 - Standdauer liegt zwischen 0 und 2 h: I_{T1} = [0, 2) h
- Klasse 2 - Standdauer liegt zwischen 2 und 4 h: I_{T2} = [2, 4) h
- Klasse 3 - Standdauer liegt zwischen 4 und 6 h: I_{T3} = [4, 6) h
- Klasse 4 - Standdauer von mehr als 6 h: I_{T4} = [6, ∞) h

Die Klassen der Ausgabeschicht zur Vorhersage des Energiebedarfs können beispielsweise wie folgt definiert sein:
- Klasse 1 - Energiebedarf liegt zwischen 0 und 10 kWh: I_{E1} = [0, 10) kWh
- Klasse 2 - Energiebedarf liegt zwischen 10 und 20 kWh: I_{E2} = [10, 20) kWh
- Klasse 3 - Energiebedarf liegt zwischen 20 und 30 kWh: I_{E3} = [20, 30) kWh
- Klasse 4 - Energiebedarf von mehr als 30 kWh: I_{E4} = [30, ∞) kWh

Die Bereiche können so gewählt werden, dass jeder Ladevorgang genau einer Klasse innerhalb einer Ausgabeschicht zugeordnet werden kann. Bei vorgegebenen Eingangswerten liefert das trainierte KNN 61 Eintrittswahrscheinlichkeiten für die Klassen der Ausgabeschichten. Diese kann wie in Tabelle 5 gezeigt aussehen:

**Tabelle 5: Beispielhafte Wahrscheinlichkeitsverteilungen für Standdauer und Energiemenge**

| Klasse | Eintrittswahrscheinlichkeit für Standdauer | Eintrittswahrscheinlichkeit für Energiebedarf |
|---|---|---|
| 1 | *p*_{1*T*} = 20 % | *p*_{1*E*} = 15 % |
| 2 | *p*_{2*T*} = 45 % | *p*_{2*E*} = 40 % |
| 3 | *p*_{3*T*} = 25 % | *p*_{3*E*} = 35 % |
| 4 | *p*_{4*T*} = 10 % | *p*_{4*E*} = 10 % |

Die Summe der Eintrittswahrscheinlichkeiten aller Klassen in einer Ausgabeschicht beträgt 100 %. Es erfolgt ferner eine Kumulation der Wahrscheinlichkeiten.

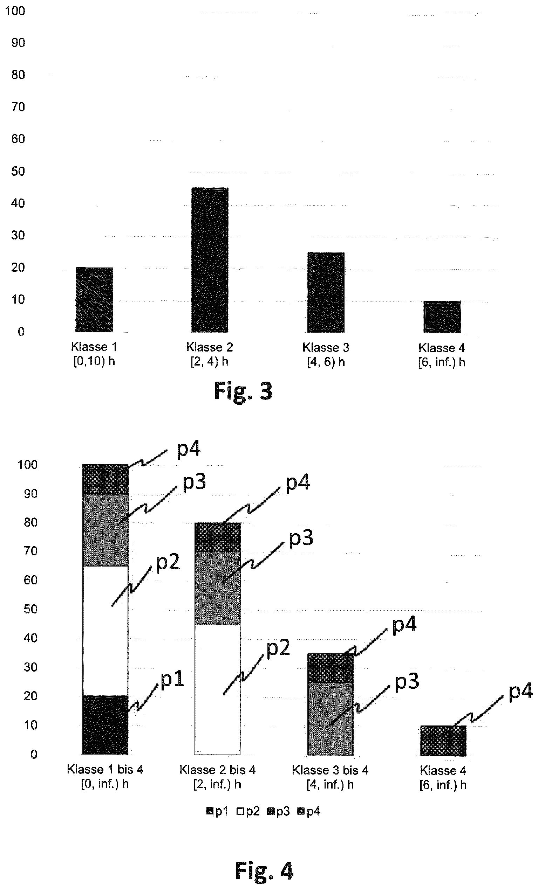

In Fig. 3 ist eine beispielhafte Wahrscheinlichkeitsverteilung für die Standdauer dargestellt. In der X-Achse sind die Klassen 1 bis 4 dargestellt und die Wahrscheinlichkeit in % ist in der Y-Achse gezeigt.

Eine Kumulation der Wahrscheinlichkeiten der Standdauer ist in Fig. 4 dargestellt. Die dritte Säule von links stellt z. B. die Summe der Wahrscheinlichkeiten für die Klassen 3 und 4 dar. Addiert man die Eintrittswahrscheinlichkeiten der Klassen 3 und 4 und führt die Zeitintervalle zusammen, so erhält man folgende Aussage: Die Wahrscheinlichkeit, dass die Standdauer mindestens 4 h beträgt, ist 35 %.

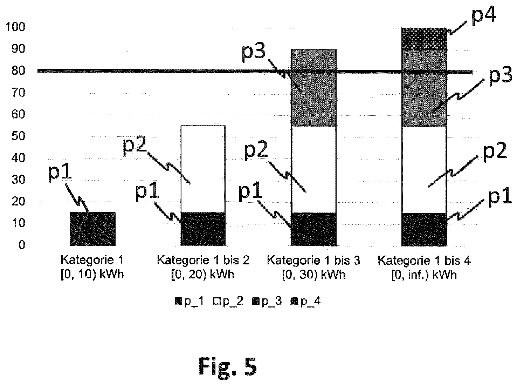

Die Fig. 5 zeigt kumulierte Wahrscheinlichkeitsverteilungen des Energiebedarfs. Die Reihenfolge der Kumulation der Wahrscheinlichkeiten kann auch umgekehrt werden. Dies wird am Beispiel der Wahrscheinlichkeitsverteilung der Klassen für den Energiebedarf in Fig. 5 veranschaulicht. Addiert man die Eintrittswahrscheinlichkeiten für die Klassen 1 und 2 und führt die Energieintervalle zusammen, so erhält man beispielsweise folgende Aussage: Die Wahrscheinlichkeit, dass der Energiebedarf weniger als 20 kWh beträgt, ist 55 %.

Die Fig. 6 zeigt beispielhaft ein KNN 61 mit vier verdeckten Schichten. Bei dem KNN 61 kann es sich um das in der Fig. 1 gezeigte KNN handeln. Die Struktur und Lernparameter des KNN 61 wurden durch einen evolutionären Algorithmus (Hyperparameteroptimierung) bestimmt. In das KNN 61 gehen die Eingangswerte 66 (vgl. Fig. 2) ein. Die Ausgangswerte 67 sind eine kumulierte Wahrscheinlichkeitsverteilung einer minimalen Standdauer eines Elektrofahrzeugs und die Ausgangswerte 68 sind eine kumulierte Wahrscheinlichkeitsverteilung eines maximalen Energiebedarfs des Elektrofahrzeugs.

Das KNN 61 als probabilistischer Klassifizierer liefert diskrete (nicht kontinuierliche) Wahrscheinlichkeitsverteilungen. Kontinuierliche Wahrscheinlichkeitsverteilungen können näherungsweise durch Interpolationen der Datenpunkte erreicht werden. So kann einer beliebigen vorgegebenen Wahrscheinlichkeit zwischen 0 und 100 % ein minimaler bzw. maximaler Zeitwert bzw. Energiewert zugewiesen werden. Die vorgegebene Wahrscheinlichkeit ist der prozentuale Vertrauenswert ("Confidence Level").

In der Fig. 5 ist ein Confidence Level von 80 % eingezeichnet. Im Falle einer linearen Interpolation der kumulierter Wahrscheinlichkeitsverteilung der Energie ergibt sich für einen Confidence Level von 80 % die folgende Aussage: Die Wahrscheinlichkeit, dass der Energiebedarf weniger als 27,14 kWh beträgt, ist 80 %. Bei einem vorgegebenen Confidence Level von 80 % für die Wahrscheinlichkeitsverteilung der Standdauer (vgl. Fig. 3), ergibt sich folgende Aussage: Die Wahrscheinlichkeit, dass die Standdauer mindestens 2 h beträgt, ist 80 %.

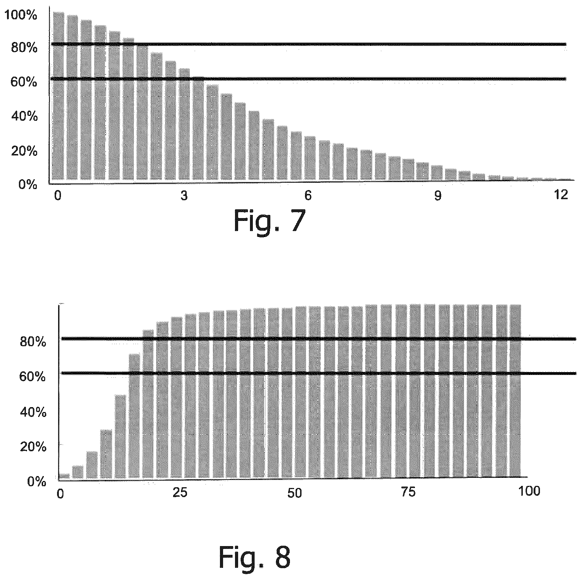

Die Fig. 7 zeigt eine beispielhafte kumulierte Wahrscheinlichkeitsverteilung in Abhängigkeit von einer minimalen Standdauer eines Elektrofahrzeugs an einer Ladestation in Stunden (h). In der Wahrscheinlichkeitsverteilung sind die Confidence Level von 60 % und 80 % eingezeichnet.

Die Fig. 8 zeigt eine beispielhafte kumulierte Wahrscheinlichkeitsverteilung in Abhängigkeit von einem maximalen Energiebedarf eines Elektrofahrzeugs in kWh. In der Wahrscheinlichkeitsverteilung sind die Confidence Level von 60 % und 80 % eingezeichnet.

Durch kumulierte Wahrscheinlichkeiten können die minimale Standdauer und die maximal benötigte Energie bei gegebenem Confidence Level bestimmt werden. Zu 60 % benötigt ein Elektrofahrzeug beispielsweise weniger als 16,5 kWh in mehr als 3:20 h, und zu 80 % benötigt ein Elektrofahrzeug beispielsweise weniger als 21 kWh in mehr als 2:20 h. Je höher der Confidence Level ist, desto mehr elektrische Leistung (geringere Standdauer, höhere Energiemenge) wird geschätzt.

Im Folgenden wird die dynamische Anpassung 140 der Wahrscheinlichkeitsverteilungen gemäß Fig. 2 beschrieben. Die Wahrscheinlichkeitsverteilungen können mit Beginn des Ladevorgangs durch das KNN 61 prädiziert werden. Während des Ladevorgangs wird die Information gewonnen, ob der Ladevorgang noch besteht und/oder ob das Elektrofahrzeug bereits vollgeladen ist. Diese Information kann in den Wahrscheinlichkeitsverteilung berücksichtigt werden. Die Berücksichtigung kann zu jedem Zeitpunkt während des Ladevorgangs erfolgen.

Die Anpassung der Wahrscheinlichkeitsverteilung wird anhand der beispielhaften Wahrscheinlichkeitsverteilungen der Tabelle 5 und dem Szenario, dass der Ladevorgang bereits 3 h dauert und bereits 15 kWh dem Elektrofahrzeug zugeführt worden sind, wie folgt erläutert: Da der Ladevorgang insgesamt mindestens 3 h dauern wird, wurde die Information gewonnen, dass der Fall der Klasse 1 (Standdauer zwischen 0 h und 2 h) nicht eingetreten ist. Ursprünglich wurde die Eintrittswahrscheinlichkeit mit *p*_{1*T*} = 20 % prädiziert. Nun kann diese Eintrittswahrscheinlichkeit auf *p*_{1*T*} = 0 % gesetzt werden. Klasse 2 besitzt das Zeitintervall *I*_{*T*2} = [2, 4) h. Der Fall von Klasse 2 kann somit noch eintreten, aber die Eintrittswahrscheinlichkeit hat sich mit der dazugewonnenen Information reduziert. Im Falle einer linearen Interpolation hat sich die Eintrittswahrscheinlichkeit für die Klasse 2 von *p*_{*T*2} = 45 % auf *p*_{2*T,d*} = 22,5 % reduziert.

Die Summe der angepassten Eintrittswahrscheinlichkeiten für die Standdauer würde nun 57,5 % betragen. Da in der Realität die Summe der Eintrittswahrscheinlichkeiten 100 % beträgt, werden die Eintrittswahrscheinlichkeiten skaliert, indem die angepasste Eintrittswahrscheinlichkeiten jeder Klasse wir folgt durch die Summe der angepassten Eintrittswahrscheinlichkeiten geteilt werden:
P_{1T} = 0 % -> p_{1T,d} = 0 %
P_{2T} = 22,5 % -> p_{2T,d} = 39,13 %
P_{3T} = 25 % -> p_{3T,d} = 43,48 %
P_{4T} = 10 % -> p_{4T,d} = 17,39 %

Im Folgenden wird die Ausführung 150 des Lastmanagements gemäß Fig. 2 beschrieben. Ziel des Lastmanagements ist eine Optimierung des Energiedurchsatzes von Ladestationen, insbesondere eine Maximierung des Energiedurchsatzes. Basierend auf einer Schätzung des Ladeverhaltens, d.h. Standdauer und/oder Energiebedarf der Elektrofahrzeuge, kann das Lastmanagement optimiert werden. Die Schätzungen von Standdauer und/oder Energiebedarf liegen im vorgestellten Ausführungsbeispiel als Wahrscheinlichkeitsverteilungen vor.

Gemäß der vorliegenden Offenbarung können verschiedene Lastmanagement-Verfahren verwendet werden. In einem ersten Lastmanagement-Verfahren wird ein prozentualer Vertrauenswert ("Confidence Level") fest vorgegeben.

In einem zweiten Lastmanagement-Verfahren wird ein prozentualer Vertrauenswert so bestimmt, dass die Summe der Ladeleistungsbedarfe aller in einem Cluster angeschlossenen Elektrofahrzeuge einer definierten Gesamtleistung entspricht. Die Gesamtleistung kann z.B. der verfügbaren Leistung im Cluster entsprechen. Den Elektrofahrzeugen wird dadurch der jeweilig berechnete Leistungsbedarf zur Verfügung gestellt.

In einem dritten Lastmanagement-Verfahren wird auf Basis einer Schätzung der Standdauer denjenigen Elektrofahrzeugen maximale elektrische Leistung zur Verfügung gestellt, die auf Basis der Schätzung voraussichtlich zeitlich als nächstes von den Ladestationen entkoppelt werden. Somit wird eine Maximierung der abgegebenen Energiemenge angestrebt. Die maximale elektrische Leistung kann durch die maximal mögliche Ladeleistung des Elektrofahrahrzeugs, durch die maximal mögliche Leistung der Ladestation und/oder durch die verfügbare Anschlussleistung des Ladestations-Clusters vorgegeben sein.

Die Fig. 8 zeigt schematisch ein Verfahren zum Steuern einer Vielzahl von Ladestationen in einem Ladesystem zum Laden von Elektrofahrzeugen. Das Verfahren kann von dem in der Fig. 1 gezeigten Backend-System 60, insbesondere von der Zentraleinheit 62, ausgeführt werden. Das Verfahren kann auch mit jedem der vorstehend beschriebenen Verfahren kombiniert werden.

Das Verfahren umfasst die Verfahrensschritte Erhalten 200, für jede Ladestation 10 und 30, an die ein Elektrofahrzeug 50 elektrisch angeschlossen ist, einer ersten Schätzung einer Standdauer des Elektrofahrzeugs 50, Erhalten 210, für jede der Ladestation 10 und 30, einer zweiten Schätzung eines Energiebedarfs des Elektrofahrzeugs 50, Erhalten 220 einer Wahrscheinlichkeit für die Standdauer und/oder den Energiebedarf des Elektrofahrzeugs 50, Bestimmen 230, für jedes Elektrofahrzeug 50 in Abhängigkeit von der ersten Schätzung, der zweiten Schätzung und der Wahrscheinlichkeit, eines Ladeleistungsbedarfswerts, und Ausgeben 240, in Abhängigkeit von den bestimmten Ladeleistungsbedarfswerten, von Steuerungsinformationen betreffend Abgaben elektrischer Leistung von der Vielzahl von Ladestationen 10 und 30 an die angeschlossenen Elektrofahrzeuge 50. Die Steuerungsinformationen können insbesondere über das Kommunikationsnetzwerk 65 an die jeweiligen Kommunikationsvorrichtungen 14 gesendet werden, welche diese an die Steuerungsvorrichtungen 12 zum Steuern der abgegeben Ladeleistung weiterleiten. Die erste Schätzung entspricht einer ersten Wahrscheinlichkeitsverteilung und die zweite Schätzung entspricht einer zweite Wahrscheinlichkeitsverteilung.

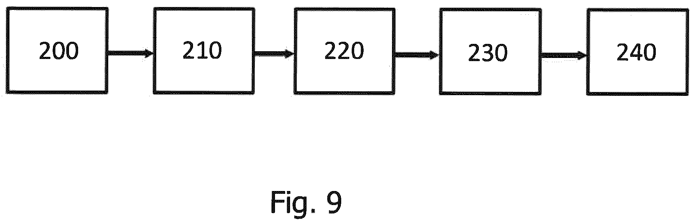

Das Verfahren der Fig. 9 kann ferner die Verfahrensschritte Bestimmen, in Abhängigkeit von der Wahrscheinlichkeit, einer minimalen Standdauer des Elektrofahrzeugs, Bestimmen, in Abhängigkeit von der Wahrscheinlichkeit, eines maximalen Energiebedarfs des Elektrofahrzeugs und Bestimmen des Ladeleistungsbedarfswerts in Abhängigkeit von der minimalen Standdauer und dem maximalen Energiebedarf umfassen. Des Weiteren kann das Verfahren der Fig. 9 den Verfahrensschritt Bestimmen der Wahrscheinlichkeit, so dass eine Summe der bestimmten Ladeleistungsbedarfswerte einem vorbestimmten Gesamtleistungswert entspricht, umfassen. Bei dem vorbestimmten Gesamtleistungswert kann es sich um die in dem Ladesystem verfügbare elektrische Leistung handeln.

Des Weiteren kann das Verfahren der Fig. 9 den Verfahrensschritt Ändern der ersten Wahrscheinlichkeitsverteilung und/oder der zweiten Wahrscheinlichkeitsverteilung in Abhängigkeit von einem Status der Abgabe der elektrischen Leistung der Ladestation an das angeschlossene Elektrofahrzeug umfassen.

Ferner kann die erste Schätzung zum Erzeugen der ersten Wahrscheinlichkeitsverteilung als kontinuierliche Wahrscheinlichkeitsverteilung interpoliert werden. Des Weiteren kann die zweite Schätzung zum Erzeugen der zweiten Wahrscheinlichkeitsverteilung als kontinuierliche Wahrscheinlichkeitsverteilung interpoliert werden.

Die Änderung der ersten Wahrscheinlichkeitsverteilung und/oder der zweiten Wahrscheinlichkeitsverteilung kann während eines Ladevorgangs erfolgen. Der Status der Abgabe der elektrischen Leistung der Ladestation an das angeschlossene Elektrofahrzeug kann Information ob ein Ladevorgang noch besteht und/oder ob ein angeschlossenes Elektrofahrzeug vollgeladen ist und/oder wie viel ein angeschlossenes Elektrofahrzeug geladen ist umfassen.

Schließich kann das Verfahren der Fig. 9 den vorgelagerten Verfahrensschritt Bestimmen, durch das KNN 61 für jede der Ladestationen 10 und 30, der ersten Schätzung der Standdauer des Elektrofahrzeugs 50 und der zweiten Schätzung des Energiebedarfs des Elektrofahrzeugs 50 umfassen.

In den vorgestellten Ausführungsbeispielen sind unterschiedliche Merkmale und Funktionen der vorliegenden Offenbarung getrennt voneinander sowie in bestimmten Kombinationen beschrieben worden. Es versteht sich jedoch, dass alle oder einige dieser Merkmale und Funktionen, wo dies nicht explizit ausgeschlossen ist, miteinander frei kombinierbar sind.

## Patentansprüche

1. Verfahren zum Steuern einer Vielzahl von Ladestationen (10, 20, 30) in einem Ladesystem zum Laden von Elektrofahrzeugen (50), umfassend
Erhalten (200), für jede Ladestation der Vielzahl von Ladestationen (10, 20, 30), an die ein Elektrofahrzeug (50) elektrisch angeschlossen ist, einer ersten Schätzung einer Standdauer des Elektrofahrzeugs (50),
Erhalten (210), für jede Ladestation der Vielzahl von Ladestationen (10, 20, 30), an die ein Elektrofahrzeug (50) elektrisch angeschlossen ist, einer zweiten Schätzung eines Energiebedarfs des Elektrofahrzeugs (50),
Erhalten (220) einer Wahrscheinlichkeit für die Standdauer und/oder den Energiebedarf des Elektrofahrzeugs (50),
Bestimmen (230), für jedes Elektrofahrzeug (50) in Abhängigkeit von der ersten Schätzung, der zweiten Schätzung und der Wahrscheinlichkeit, eines Ladeleistungsbedarfswerts und
Ausgeben (240), in Abhängigkeit von den bestimmten Ladeleistungsbedarfswerten, von Steuerungsinformationen betreffend Abgaben elektrischer Leistung von der Vielzahl von Ladestationen (10, 20, 30) an die angeschlossenen Elektrofahrzeuge (50).

2. Verfahren nach Anspruch 1, ferner umfassend, für jede Ladestation der Vielzahl von Ladestationen (10, 20, 30),
Bestimmen, in Abhängigkeit von der Wahrscheinlichkeit, einer minimalen Standdauer des Elektrofahrzeugs (50),
Bestimmen, in Abhängigkeit von der Wahrscheinlichkeit, eines maximalen Energiebedarfs des Elektrofahrzeugs (50) und
Bestimmen des Ladeleistungsbedarfswerts in Abhängigkeit von der minimalen Standdauer und dem maximalen Energiebedarf.

3. Verfahren nach einem der vorhergehenden Ansprüche, ferner umfassend
Bestimmen der Wahrscheinlichkeit, so dass eine Summe der bestimmten Ladeleistungsbedarfswerte einem vorbestimmten Gesamtleistungswert entspricht.

4. Verfahren nach Anspruch 3, wobei der vorbestimmte Gesamtleistungswert die in dem Ladesystem verfügbare elektrische Leistung ist.

5. Verfahren nach einem der vorhergehenden Ansprüche, wobei die erste Schätzung einer ersten Wahrscheinlichkeitsverteilung entspricht und die zweite Schätzung einer zweite Wahrscheinlichkeitsverteilung entspricht, und das Verfahren ferner, für jede Ladestation der Vielzahl von Ladestationen (10, 20, 30), umfasst:
Ändern der ersten Wahrscheinlichkeitsverteilung und/oder der zweiten Wahrscheinlichkeitsverteilung in Abhängigkeit von einem Status der Abgabe der elektrischen Leistung der Ladestation (10, 20, 30) an das angeschlossene Elektrofahrzeug (50).

6. Verfahren nach Anspruch 5, ferner umfassend
Interpolieren der ersten Schätzung zum Erzeugen der ersten Wahrscheinlichkeitsverteilung als kontinuierliche Wahrscheinlichkeitsverteilung, und/oder
Interpolieren der zweiten Schätzung zum Erzeugen der zweiten Wahrscheinlichkeitsverteilung als kontinuierliche Wahrscheinlichkeitsverteilung.

7. Verfahren nach Anspruch 5 oder 6, wobei die Änderung der ersten Wahrscheinlichkeitsverteilung und/oder der zweiten Wahrscheinlichkeitsverteilung während eines Ladevorgangs erfolgt und der Status Information ob ein Ladevorgang noch besteht und/oder ob ein angeschlossenes Elektrofahrzeug (50) vollgeladen ist und/oder wie viel ein angeschlossenes Elektrofahrzeug (50) geladen ist umfasst.

8. Verfahren nach einem der vorhergehenden Ansprüche, ferner umfassend
Bestimmen, durch ein neuronales Netzwerk (61) für jede Ladestation der Vielzahl von Ladestationen (10, 20, 30), der ersten Schätzung der Standdauer des Elektrofahrzeugs (50) und der zweiten Schätzung des Energiebedarfs des Elektrofahrzeugs (50).

9. Verfahren nach Anspruch 8, wobei in das neuronale Netzwerk (61) eine oder mehrere der folgenden Informationen eingehen: Information betreffend einen Zeitpunkt eines Beginns eines Ladevorgangs eines Elektrofahrzeugs (50), Information betreffend einen Wochentag zum Zeitpunkt des Beginns des Ladevorgangs des Elektrofahrzeugs (50), Information betreffend einen Zeitpunkt eines Beginns eines Ladevorgangs eines Elektrofahrzeugs (50) in einem Jahr, Information betreffend eine Art des Betriebs des Ladesystems und/oder mindestens einer Ladestation der Vielzahl von Ladestationen (10, 20, 30), Information betreffend eine örtliche Distanz zwischen einem aktuellen und einem früherem/früheren Ladevorgang/Ladevorgängen, historische Information betreffend Kunden, Kundengruppen und/oder Elektrofahrzeuge (50), und historische Information betreffend das Ladesystem und/oder mindestens eine Ladestation der Vielzahl von Ladestationen (10, 20, 30).

10. Verfahren nach Anspruch 8 oder 9, ferner umfassend
Durchführen einer Datenaufbereitung von in das neuronales Netzwerk (61) eingehenden Werten, wobei die Datenaufbereitung eine zweistufige Gruppierung und/oder eine gewichtete Gruppierung basierend auf einem Zeitpunkt eines Beginns eines Ladevorgangs eines Elektrofahrzeugs (50), einer Standdauer eines Elektrofahrzeugs (50) und eines Energiebedarfs eines Elektrofahrzeugs (50) umfasst.

11. Verfahren nach Anspruch 10, wobei
die zweistufige Gruppierung erstes Gruppieren von Ladeverhalten für eine Vielzahl von kunden- und/oder standortbasierten Identifikationen mit Hilfe eines k-Means oder eines Density-Based Spatial Clustering of Applications with Noise, DBSCAN, Algorithmus und zweites Gruppieren der Identifikationen basierend auf Ähnlichkeiten von Ladeverhaltensgruppen umfasst, und
die gewichtete Gruppierung eine Gewichtung basierend auf dem Zeitpunkt des Beginns des Ladevorgangs umfasst.

12. Zentraleinheit (62) zum Steuern einer Vielzahl von Ladestationen (10, 20, 30) in einem Ladesystem zum Laden von Elektrofahrzeugen (50), wobei die Zentraleinheit (62) dazu eingerichtet ist, das Verfahren nach einem der vorhergehenden Ansprüche auszuführen.

13. Ladesystem zum Laden von Elektrofahrzeugen (50), umfassend die Zentraleinheit (62) nach Anspruch 12 und eine Vielzahl von Ladestationen (10, 20, 30).
